# EUROPÄISCHE PATENTANMELDUNG

(11) **EP 1 093 049 A2**
(43) Veröffentlichungstag der Anmeldung: **18.04.2001**
(21) Anmeldenummer: 00890312.2
(22) Anmeldetag: 13.10.2000
(51) Int. Cl.: G06F 1/20

(54) **Personal Computer für den Industrieeinsatz**

(30) Priorität: 14.10.1999 AT 71099
(71) Anmelder: PCQT International GmbH, 1200 Wien (AT)
(72) Erfinder: Kolbinger, Berndt, Ing.,, 2384 Breitenfurt (AT)
(74) Vertreter: Miksovsky, Alexander, Dipl.-Ing.

(57) **Zusammenfassung**

Bei einem Computer, insbesondere Personal Computer für den Industrieeinsatz, wobei in einem Gehäuse (1) wenigstens eine Rechnereinheit, eine Stromversorgungseinheit sowie ein Kühlsystem zur Kühlung der im Gehäuse aufgenommenen Komponenten vorgesehen ist, ist vorgesehen, daß das Kühlsystem im Inneren des Gehäuses (1) wenigstens zwei voneinander verschiedene, im wesentlichen geschlossene, das Innere des Gehäuses in voneinander verschiedenen Strömungswegen (3, 4, 6) überstreichende Kühlkreisläufe aufbaut, wodurch sich eine zuverlässige Kühlung des gesamten Innenraums des Gehäuses (1) des Computers erzielen läßt.

## Beschreibung

Die vorliegende Erfindung bezieht sich auf einen Computer, insbesondere Personal Computer für den Industrieeinsatz, wobei in einem Gehäuse wenigstens eine Rechnereinheit, eine Stromversorgungseinheit sowie ein Kühlsystem zur Kühlung der im Gehäuse aufgenommenen Komponenten vorgesehen ist.

Insbesondere für den Industrieeinsatz ist es für Computer, beispielsweise Personal Computer, bekannt, derartige Geräte entsprechend robust und widerstandsfähig auszubilden, da diese Geräte unter Umständen unter rauhen Umweltbedingungen, beispielsweise in Labors, Fabrikshallen oder dgl., eingesetzt werden und üblicherweise ein durchgehender 24-Stunden-Betrieb über Monate bzw. Jahre ohne Unterbrechung erforderlich ist, so daß mit üblichen Computern, insbesondere Personal Computern, wie sie beispielsweise für den vergleichsweise kurzfristigen Büroeinsatz gedacht sind, nicht das Auslangen gefunden wird. Darüber hinaus muß neben einer entsprechend robusten Bauweise auch eine entsprechende Abschirmung bzw. Abdichtung gegenüber Umwelteinflüssen vorgesehen sein, wobei jedoch selbst bei entsprechend abgedichtetem bzw. abgeschirmtem Gehäuse trotzdem eine entsprechende Kühlung der in dem Gehäuse aufgenommenen Komponenten sichergestellt sein muß. Um ein übermäßiges Eindringen von Verschmutzungen, wie beispielsweise Staub oder dgl., in das Innere des Gehäuses zu vermeiden, ist es beispielsweise bekannt, im Bereich von Luftansaugöffnungen bzw. -schlitzen an der Gehäusewand entsprechende Filter vorzusehen, welche jedoch bei einem Einsatz unter entsprechend rauhen Bedingungen sehr rasch verschmutzen und einen dementsprechend hohen Wartungsaufwand mit sich bringen.

Darüber hinaus ist es bei bekannten Kühlsystemen für Computer üblich, derartige Luftansaugöffnungen sowie einen Ventilator in einem Eckbereich, beispielsweise im Bereich der Vorderfront des Gehäuses, vorzusehen und im wesentlichen diametral gegenüberliegend entsprechende Austrittsöffnungen zum Ausbringen der Luft auszubilden, so daß eine im wesentlichen diagonale Kühlung im Inneren des Gehäuses erfolgt, wobei insbesondere Randbereiche, welche von dieser diagonalen Linie durch das Gehäuse entfernt liegen, kaum bzw. nur unzureichend gekühlt werden. Dies ist bei Anordnung eines Ventilators in einem Eckbereich der Vorderfront des Gehäuses insbesondere problematisch, da üblicherweise ebenfalls an der Vorderfront Laufwerke installiert sind, so daß diese Laufwerke, welche außerhalb einer diagonalen Linie durch das Gehäuse liegen, zumeist unzureichend gekühlt werden und bei Tage oder Monate dauerndem, ununterbrochenem Einsatz entsprechend erhöhte Temperaturen im Vergleich zu den restlichen Komponenten des Computers aufweisen. Wenn auch eine gewisse Temperaturerhöhung ohne unmittelbare Beschädigung der Laufwerke bzw. der darin aufgenommenen Datenträger möglich ist, so ist insbesondere bei Einsatz der Computer unter Umgebungsbedingungen mit erhöhten Außentemperaturen relativ rasch die für einen problemlosen Einsatz von Komponenten im Inneren des Gehäuses zumutbare Maximaltemperatur erreicht, so daß entweder mit einer geringeren Anzahl von Laufwerken bzw. allgemein Komponenten gearbeitet werden muß bzw. Schäden am Computer zu befürchten sind.

Die vorliegende Erfindung zielt nun darauf ab, einen Computer, insbesondere Personal Computer für den Industrieeinsatz, der eingangs genannten Art dahingehend weiterzubilden, daß durch ein verbessertes Kühlsystem nicht nur der gesamte Innenbereich des Gehäuses im wesentlichen gleichmäßig gekühlt werden kann, sondern daß durch entsprechende Rückführung der Kühlluft auf aufwendige Filtereinrichtungen verzichtet bzw. deren Einsatz und damit der Wartungsaufwand erheblich reduziert werden kann. Zur Lösung dieser Aufgaben ist der erfindungsgemäße Computer im wesentlichen dadurch gekennzeichnet, daß das Kühlsystem im Inneren des Gehäuses wenigstens zwei voneinander verschiedene, im wesentlichen geschlossene, das Innere des Gehäuses in voneinander verschiedenen Strömungswegen überstreichende Kühlkreisläufe aufbaut. Dadurch, daß erfindungsgemäß durch das Kühlsystem im Inneren des Gehäuses wenigstens zwei voneinander verschiedene, im wesentlichen geschlossene Kühlkreisläufe mit entsprechend verschiedenen Strömungswegen ausgebildet werden, wird sichergestellt, daß durch diese unterschiedlichen Strömungswege das Innere des Gehäuses großflächig und im wesentlichen gleichmäßig überstrichen wird, so daß unabhängig von der Positionierung der einzelnen Komponenten im Inneren des Gehäuses eine gleichmäßige, entsprechend reduzierte Temperatur aufrecht erhalten werden kann. Dadurch, daß erfindungsgemäß die Strömungswege der Kühlkreisläufe im wesentlichen geschlossen im Inneren des Gehäuses geführt werden, ergibt sich keine Notwendigkeit, jeweils die für die Kühlung erforderliche Luftmenge von außen zuzuführen, wofür eine entsprechende Reinigung bzw. Filterung zur Vermeidung des Eintritts von Staub bzw. Fremdteilchen in das Innere des Gehäuses erforderlich wird, so daß eine Verschmutzung der im Gehäuseinneren aufgenommenen Komponenten auch ohne aufwendige Filtereinrichtungen über lange Einsatzzeiträume vermieden werden kann.

Um im Inneren des Gehäuses die erfindungsgemäß vorgesehenen, im wesentlichen geschlossenen Strömungswege für das erfindungsgemäße Kühlsystem aufrecht zu erhalten und entsprechend definieren zu können, ist gemäß einer weiters bevorzugten Ausführungsform vorgesehen, daß das Gehäuse mit im wesentlichen luft- und staubdicht abgeschlossenen bzw. abschließbaren Außenwänden ausgebildet ist und im Inneren unmittelbar benachbart zu wenigstens einigen Seitenwänden bzw. dem Boden Zwischenwände mit Durchtrittsöffnungen zur Ausbildung der unterschiedlichen Strömungswege angeordnet sind. Dadurch, daß erfindungsgemäß das Gehäuse im wesentlichen luft- und staubdicht abgeschlossen bzw. abschließbar ist, wird eine Außenumhüllung geschaffen, wobei durch Vorsehen von Zwischenwänden im Bereich von wenigstens einigen Seitenwänden bzw. dem Boden mit entsprechenden Durchtrittsöffnungen zur Ausbildung der Strömungswege nicht nur die durch das Innere des Gehäuses verlaufenden Strömungswege definiert werden, sondern darüber hinaus sichergestellt wird, daß beispielsweise für eine Rückführung der Kühlluft diese entlang einer Außenwand bzw. dem Boden geführt wird, so daß eine entsprechende Wärmeabgabe an die Außenwände und somit eine Abkühlung bei der Rückführung der Luft erzielbar ist.

Neben der Anordnung von zusätzlichen Zwischenwänden, welche darüber hinaus der Versteifung und somit der Erhöhung der mechanischen Festigkeit des Gehäuses dienen, mit entsprechenden Durchtrittsöffnungen bzw. Durchtrittsschlitzen zur Definierung der Strömungswege ist gemäß einer weiters bevorzugten Ausführungsform vorgesehen, daß eine mit einem Hohlraum versehene Bodenplatte vorgesehen ist, welche in Randbereichen mit Durchbrechungen bzw. Durchtrittsschlitzen ausgebildet ist. Durch eine derartige hohle bzw. mit einem Hohlraum versehene Bodenplatte, welche in Randbereichen mit Durchbrechungen bzw. Durchtrittsschlitzen ausgebildet ist, kann eine außenliegende, vollständig geschlossene Bodenplatte beim Gehäuse eingesetzt werden und eine Rückführung von Kühlluft zur Ausbildung von geschlossenen Kreisläufen durch die mit dem Hohlraum ausgebildete Bodenplatte erfolgen, so daß großflächig eine Abkühlung der beim Durchgang durch das Innere des Gehäuses aufgewärmten Kühlluft während des Durchtritts durch den Hohlraum der Bodenplatte möglich wird.

Üblicherweise ist bei Computern an der Rückseite der Gehäuse eine Vielzahl von Steckanschlüssen oder dgl. vorgesehen, welche für eine Verbindung mit Zusatzgeräten bzw. anderen Computereinheiten dienen. Zum Schutz dieser Anschlüsse sowie für eine ordnungsgemäße Abdichtung des Inneren des Gehäuses ist gemäß einer weiters bevorzugten Ausführungsform erfindungsgemäß vorgesehen, daß ein abnehmbarer Deckel an der Rückseite des Gehäuses vorgesehen ist, welcher einen Freiraum zwischen einer am rückwärtigen Ende des Gehäuses vorgesehenen Zwischenwand und der Innenfläche des Deckels definiert, wobei der Freiraum mit Durchtrittsöffnungen in der Zwischenwand und/oder der Bodenplatte in Verbindung steht. Neben der durch den Deckel erzielbaren Schutzfunktion wird darüber hinaus durch den zwischen einer rückwärtigen Zwischenwand und der Innenwand des Deckels definierten Zwischenraum sichergestellt, daß im Zusammenwirken mit entsprechenden Durchtrittsöffnungen in der Zwischenwand sowie beispielsweise der mit einem Hohlraum ausgebildeten Bodenplatte die Kühlluft durch das gesamte Innere des Gehäuses geführt wird und im Bereich der Rückwand bzw. des Deckels umgeleitet und rückgeführt wird.

Wie eingangs erwähnt, wird bei dem erfindungsgemäßen System die angestrebte, verbesserte Kühlwirkung im wesentlichen dadurch erzielt, daß im Inneren des Gehäuses wenigstens zwei voneinander verschiedene, im wesentlichen geschlossene Strömungswege bzw. Kühlkreisläufe aufgebaut werden, wobei für eine einfache Ausbildung von derartigen voneinander getrennten Strömungswegen gemäß einer weiters bevorzugten Ausführungsform erfindungsgemäß vorgeschlagen wird, daß in einem Eckbereich des Gehäuses ein in einem tunnelartigen Kanal angeordneter Ventilator vorgesehen ist, welcher schräg zur Längsachse des Kanals eingebaut ist, wobei der Kanal in einer Begrenzungswand in der Hauptdurchströmungsrichtung des Ventilators als auch in wenigstens zwei normal dazu stehenden Seitenwänden mit Durchtrittsöffnungen ausgebildet ist. Durch einen in einem tunnelartigen Kanal angeordneten Ventilator, wobei lediglich in einer Begrenzungswand in Hauptdurchströmungsrichtung des Ventilators als auch wenigstens zwei normal dazu stehenden Seitenwänden Durchtrittsöffnungen ausgebildet sind, wird ein gerichtetes bzw. orientiertes Ausbringen der durch den Ventilator geförderten Kühlluft in voneinander unterschiedlichen Richtungen sichergestellt. Weiters wird durch den an den weiteren Seitenwänden im wesentlichen geschlossenen Kanal gleichzeitig ein Rückführen bzw. ein unmittelbares Ansaugen der durch den Ventilator an einer Seite ausgebrachten Luft verhindert, so daß im Zusammenwirken mit dem erfindungsgemäß schräg angeordneten Ventilator und den in dem Aufnahmekanal vorgesehenen Durchtrittsöffnungen sowie den im Bereich von Zwischenwänden bzw. der mit einem Hohlraum ausgebildeten Bodenplatte vorgesehenen Durchtrittsöffnungen ein vollständiges Überstreichen des Innenraums des Gehäuses mit Kühlluft entsprechend wenigstens zwei voneinander verschiedenen Strömungswegen, welche in sich geschlossen sind, sichergestellt wird.

Wie oben bereits angedeutet, kann eine Rückführung der Kühlluft im wesentlichen über die mit einem Hohlraum ausgebildete Bodenplatte erfolgen, wobei für eine ordnungsgemäße Rückführung zu dem Ventilator in diesem Zusammenhang vorgeschlagen wird, daß im Bereich des Ventilators die Bodenplatte mit einer Zufuhröffnung für zu dem Ventilator rückzuführende Luft ausgebildet ist, wie dies einer weiteren bevorzugten Ausführungsform des erfindungsgemäßen Computers entspricht.

Falls eine geringe Beimischung von Frischluft zu der im Inneren des Gehäuses in voneinander verschiedenen Kreisläufen geführten Kühlluft gewünscht wird, wird gemäß einer weiters bevorzugten Ausführungsform vorgeschlagen, daß im Bereich des Ventilators die entsprechende Außenwand des Gehäuses mit insbesondere verschließbaren Luftzufuhröffnungen ausgebildet ist. Eine derartige Ausbildung mit zusätzlichen Luftzufuhröffnungen kann beispielsweise bei Einbau des Computers in entsprechenden Schrankanlagen, welche selbst abgeschlossen sind und derart im Inneren nur eine geringe Belastung mit Fremdpartikeln bzw. Staub aufweisen, vorgesehen sein oder insbesondere in Umgebungen eingesetzt sein, welche eine entsprechend verringerte Umweltbelastung aufweisen. Gegebenenfalls können einfache Filtereinrichtungen im Bereich derartiger zusätzlicher Luftzufuhröffnungen an der Außenwand vorgesehen sein, wobei unmittelbar einsichtig ist, daß bei lediglich geringer Beimischung von Frischluft auch eine entsprechend herabgesetzte Reinigungswirkung der Filter erforderlich ist bzw. stark erhöhte Wartungs- bzw. Austauschintervalle für gegebenenfalls vorzusehende Filter notwendig sind.

Wie oben bereits angedeutet, ist es insbesondere bei Einsatz unter rauhen Umgebungsbedingungen günstig bzw. erforderlich, ein im wesentlichen geschlossenes Gehäuse bereitzustellen, um die Kühlluft im wesentlichen im Inneren des Gehäuses zu rezyklieren, um ein Einbringen von Umgebungsbelastungen, insbesondere Staub, Fremdpartikel und dgl., weitgehend zu minimieren. In diesem Zusammenhang wird gemäß einer weiters bevorzugten Ausführungsform vorgeschlagen, daß Laufwerke mit einer insbesondere staubdicht abschließbaren, verschwenkbaren Abdeckung abdeckbar sind, so daß auch im Bereich der Laufwerke ein Eindringen von Verschmutzungen, welche durch die im Inneren des Gehäuses aufgebaute Luftströmung mitgerissen wurden, vermieden werden kann.

Zur weiteren Erhöhung der Kühlleistung wird gemäß einer weiters bevorzugten Ausführungsform vorgeschlagen, daß an einander im wesentlichen diametral gegenüberliegenden Eckbereichen des Gehäuses zwei Ventilatoren vorgesehen sind, wobei die von den Ventilatoren im Inneren des Gehäuses aufgebauten, im wesentlichen geschlossenen Strömungswege einander kreuzen bzw. schneiden. Die Strömungswege können entweder durch entsprechende Anordnung der zusätzlichen Durchtrittsöffnungen in Zwischenwänden oder einer mit einem Hohlraum versehenen Bodenplatte auf die Position der zwei Ventilatoren abgestimmt sein oder es kann, wie dies erfindungsgemäß bevorzugt vorgeschlagen wird, der zusätzlich vorgesehene Ventilator wenigstens einen weiteren Kühlkreislauf mit unterschiedlichem, ebenfalls geschlossenem Strömungsweg aufbauen, so daß sich die Strömungswege, welche von den unterschiedlichen Ventilatoren aufgebaut werden, schneiden bzw. kreuzen, um derart die Kühlwirkung im Inneren des Gehäuses an jeder Position weiter zu verbessern bzw. zu optimieren.

Die Erfindung wird nachfolgend anhand von in der beiliegenden Zeichnung schematisch dargestellten Ausführungsbeispielen näher erläutert. In dieser zeigen:
Fig. 1 eine schematische Darstellung der Strömungswege in einem erfindungsgemäßen Computer, wobei Fig. 1a eine Ausführungsform mit einem Gebläse bzw. Ventilator zeigt und Fig. 1b eine abgewandelte Ausführungsform mit zwei Ventilatoren zeigt;
Fig. 2 eine schematische, perspektivische Seitenansicht eines erfindungsgemäßen Computers bei im wesentlichen geschlossenem Außengehäuse;
Fig. 3 eine perspektivische Explosionsdarstellung eines erfindungsgemäßen Computers;
Fig. 4 eine abgewandelte Ausführungsform eines erfindungsgemäßen Computers ebenfalls in perspektivischer Explosionsdarstellung;
Fig. 5 in vergrößertem Maßstab eine perspektivische Seitenansicht eines in einem erfindungsgemäßen Computer verwendeten Ventilators; und
Fig. 6 in ebenfalls perspektivischer Ansicht eine weitere Darstellung eines in einem erfindungsgemäßen Computer verwendeten Ventilators, wobei zusätzlich Zuström- und Abströmrichtungen der durch den Ventilator geförderten Kühlluft angedeutet sind.

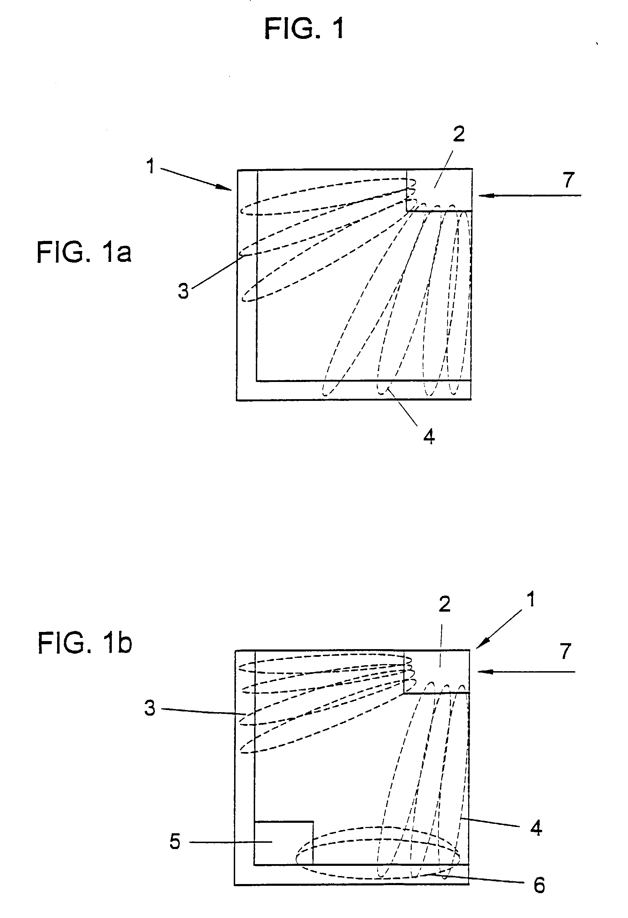

In Fig. 1 ist schematisch jeweils mit 1 ein Gehäuse eines Computers angedeutet, wobei in der Ausführungsform gemäß Fig. 1a in einem Eckbereich ein Ventilator bzw. Gebläse angeordnet ist. Wie dies anhand der nachfolgenden Figuren noch deutlicher dargestellt wird, wird durch die spezielle Anordnung des Ventilators 2 als auch durch entsprechende Durchtrittsöffnungen bzw. Durchtrittsschlitze in in Fig. 1 schematisch angedeuteten Seiten- bzw. Zwischenwänden und/ oder einer mit einem Hohlraum ausgebildeten Bodenplatte bewirkt, daß im Inneren des Gehäuses 1 bei der in Fig. 1a dargestellten Ausführungsform zwei voneinander verschiedene, im wesentlichen geschlossene und das Innere des Gehäuses in voneinander verschiedenen Strömungswegen überstreichende Kühlkreisläufe ausgebildet werden, wobei fächerartige Strömungswege mit 3 und 4 in Fig. 1a schematisch angedeutet sind.

In ähnlicher Weise ist bei der in Fig. 1b dargestellten Ausführungsform wiederum in einem Eckbereich ein Ventilator bzw. Gebläse 2 angeordnet, welcher(s) wie in der Ausführungsform gemäß Fig. 1a wiederum voneinander verschiedene, geschlossene Strömungswege ausbildet, welche mit 3 und 4 bezeichnet sind. Zusätzlich ist bei der Ausführungsform gemäß Fig. 1b im wesentlichen diametral dem ersten Ventilator 2 gegenüberliegend ein zweiter Ventilator 5 angeordnet, welcher ebenfalls durch Zusammenwirken mit entsprechenden Durchtrittsschlitzen in Zwischenwänden bzw. der Bodenplatte einen weiteren, in sich geschlossenen Strömungsweg 6 ausbildet.

Wie aus den schematischen Ansichten gemäß Fig. 1a und 1b ersichtlich, bewirken die vorgesehenen, wenigstens zwei, voneinander verschiedenen Strömungswege 3, 4 und 5, welche in sich geschlossene Wege für die Kühlluft im Inneren des Gehäuses ausbilden, daß das Innere des Gehäuses im wesentlichen vollständig von Kühlluft überstrichen wird, so daß sämtliche im Inneren des Gehäuses 1 angeordnete Komponenten durch die im Inneren des Gehäuses zirkulierende Kühlluft gekühlt werden. Gegebenenfalls kann im Bereich des Ventilators 2 eine gewisse Teilmenge an Frischluft aus der Außenumgebung zugeführt werden, wie dies schematisch durch einen Pfeil 7 angedeutet ist.

Insbesondere bei der Ausbildung gemäß Fig. 1a ist im wesentlichen dem Ventilator 2 gegenüberliegend ein Teilbereich des Inneren des Gehäuses 1 ersichtlich, welcher weniger mit Kühlluft versorgt wird, wobei in diesem Bereich beispielsweise eine Notstromversorgung, beispielsweise Batterien, angeordnet werden können, welche keine bzw. nur eine herabgesetzte Kühlung benötigen.

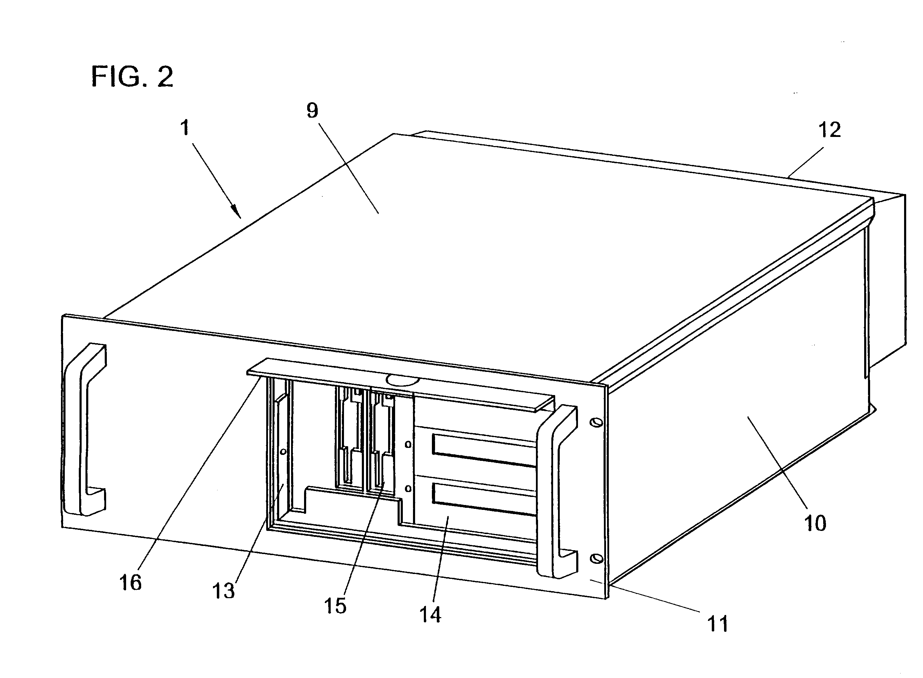

Bei der schematischen Darstellung gemäß Fig. 2 ist das Außengehäuse des Computers mit 1 bezeichnet, wobei ersichtlich ist, daß das Außengehäuse 1 von im wesentlichen vollständig geschlossenen Begrenzungswänden gebildet ist, wobei eine Deckplatte mit 9, eine Seitenplatte mit 10, eine Frontplatte mit 11 und eine Rückwand bzw. ein Deckel mit 12 bezeichnet ist. Weiters ist in Fig. 2 ersichtlich, daß in der Frontplatte 11 eine Zutrittsöffnung 13 zu allgemein mit 14 und 15 bezeichneten Laufwerken vorgesehen ist, wobei für ein im wesentlichen staubdichtes Abschließen des Gehäuses die Öffnung 13 durch eine verschwenkbare Abdeckung 16 abschließbar ist, welche in Fig. 2 in der Offenstellung, welche einen Zugriff zu den Laufwerken ermöglicht, gezeigt ist.

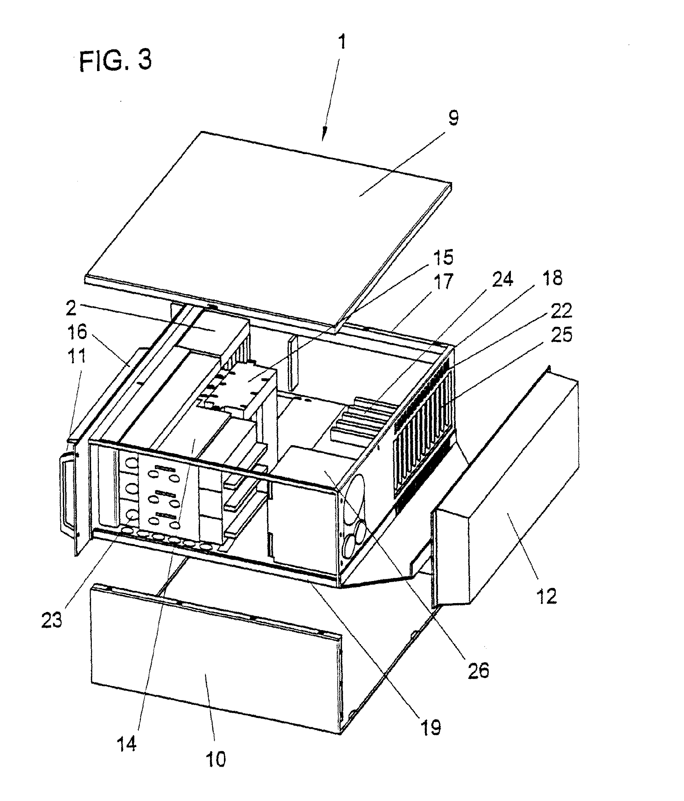

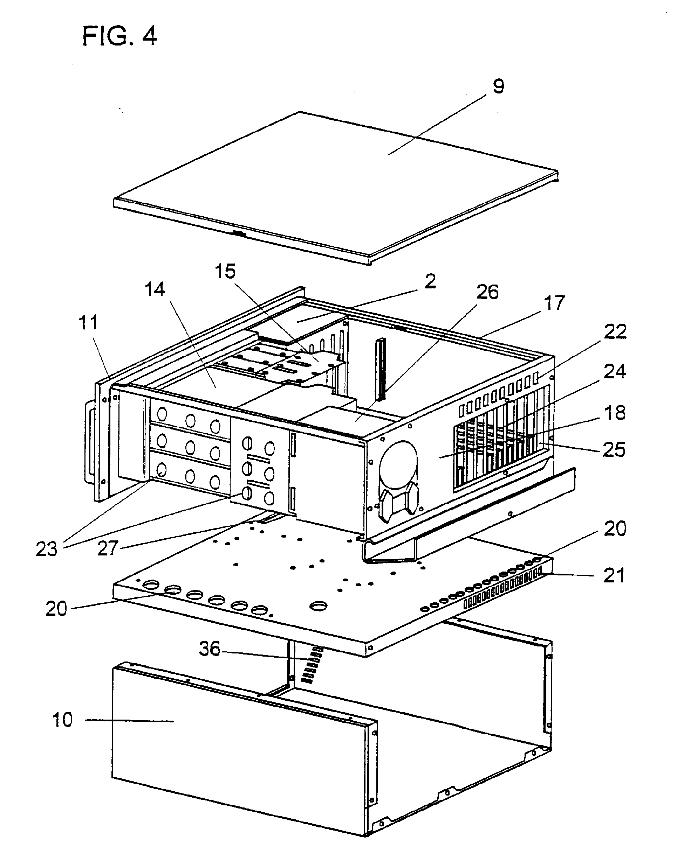

In den in den Fig. 3 und 4 gezeigten Explosionsdarstellungen von zwei geringfügig unterschiedlichen Ausführungsformen, welche sich insbesondere durch die Anordnung von Einzelkomponenten im Inneren des Gehäuses 1 unterscheiden, ist ersichtlich, daß durch die im wesentlichen staubdicht bzw. luftdicht miteinander verbindbaren Außenelemente 9, 10, 11 und 12, wobei die in Fig. 2 ersichtliche Seitenwand Teil eines im wesentlichen U-förmigen Außenwand- bzw. Rahmenelements ist, insgesamt ein geschlossenes Außengehäuse erzielbar ist. Im Inneren des Gehäuses 1 sind neben Rahmenstreben 17 zumindest im Bereich der Rückwand bzw. vor dem Deckel 12 eine Zwischenwand 18 sowie darüber hinaus eine zusätzliche Bodenplatte 19 vorgesehen, wobei aus Fig. 4 deutlicher ersichtlich ist, daß die Bodenplatte 19 in den vom Ventilator 2 abgewandten Endbereichen sowohl in ihrer Grundfläche mit Durchtrittsöffnungen 20 als auch in ihrer hinteren Begrenzungsfläche mit weiteren Durchtrittsöffnungen bzw. -schlitzen 21 ausgebildet ist. Darüber hinaus sind in der rückwärtigen Zwischenwand zusätzliche Luftdurchtrittsschlitze bzw. -durchbrechungen 22 vorgesehen und es sind auch im Seitenwandbereich neben den schematisch dargestellten Laufwerken ebenfalls Luftdurchtrittsöffnungen 23 vorgesehen. Bei beiden Ausführungsformen gemäß den Fig. 3 und 4 sind Einschubpositionen bzw. Festlegungspositionen 24 für entsprechende Rechen- und Steuereinheiten bzw. Module nicht besetzt. Es ist daher davon auszugehen, daß die unterhalb der Luftdurchtrittsschlitze 22 in den Fig. 3 und 4 dargestellten Durchbrechungen bei fertiggestelltem Computer entweder abgedeckt oder beispielsweise mit entsprechenden Steckkontakten versehen sind, so daß durch diese Durchbrechungen 25 ein Luftdurchtritt nicht möglich ist.

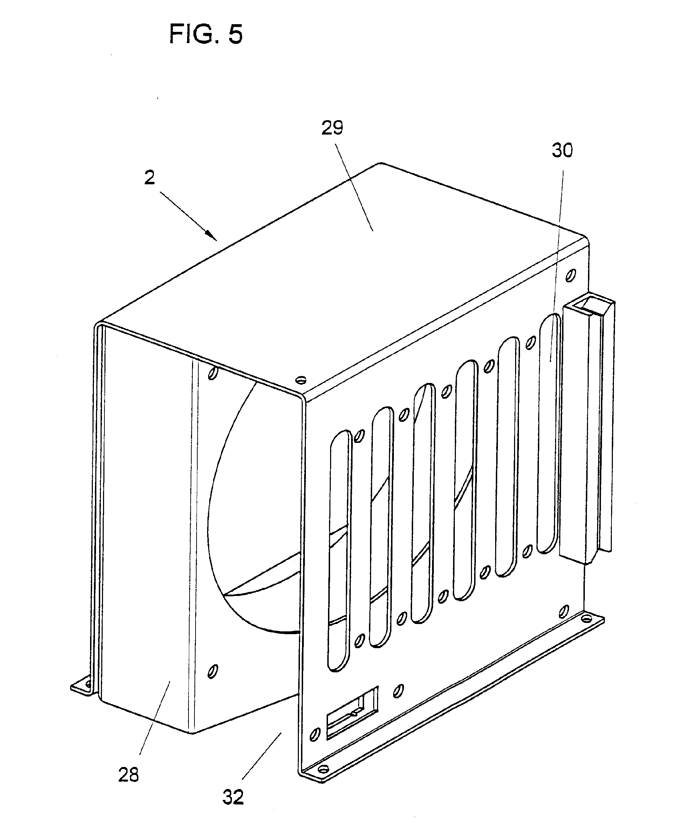

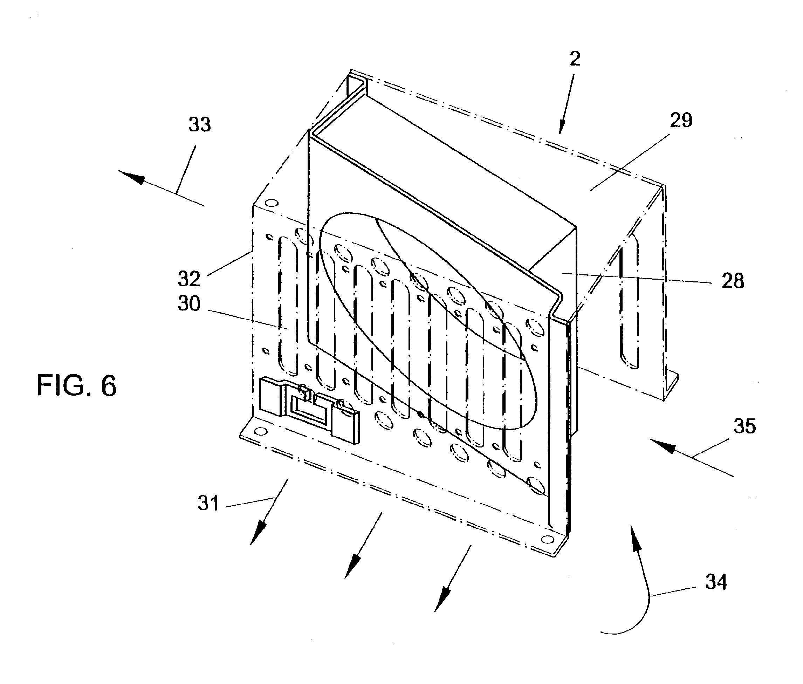

Ausgehend von dem wiederum in einem Eckbereich angeordneten Ventilator 2, dessen Konstruktion nachfolgend in den Fig. 5 und 6 in größerem Detail gezeigt ist, gelangt vom Ventilator 2 ausgebrachte Luft entsprechend dem Strömungsweg 3 in den Bereich der Laufwerke 14, 15 und gelangt an diesen vorbei entweder unmittelbar in die Durchbrechungen 20 der mit einem Hohlraum versehenen Bodenplatte 19 oder über die Durchbrechungen 23 nachfolgend in den Bereich der Durchbrechungen 20, so daß sich die schematisch in den Fig. 1a und 1b gezeigten Strömungswege 3 ergeben und insgesamt eine sichere und zuverlässige Kühlung des die Laufwerke aufnehmenden Bereichs im Inneren des Computergehäuses erzielbar ist.

Darüber hinaus gelangt Kühlluft aus dem Ventilator bzw. Gebläse 2 in den Bereich der Einschubpositionen 24 und von diesen über die Luftdurchtrittsschlitze 22 in den Bereich der an der Rückseite der Bodenplatte 19 vorgesehenen Luftdurchtrittsschlitze 25 bzw. unmittelbar in die unterhalb der Einschubpositionen 24 vorgesehenen Durchtrittsöffnungen 20 in der hohlen Bodenplatte 19, so daß sich die in den Fig. 1a und 1b gezeigten Strömungswege 4 ergeben und somit ebenfalls eine zuverlässige Kühlung dieses Bereichs der Einschubposition 24 erzielbar wird. Der geschlossene Strömungsweg im Bereich des Kühlkreislaufs 4 wird hiebei durch den aufzusetzenden Deckel 12 zur Umlenkung der Kühlluft sichergestellt, wobei der Deckel 12 nicht nur einen Freiraum für eine ordnungsgemäße Luftzirkulation, sondern auch einen Aufnahmeraum für entsprechende Steckverbindungen ermöglicht, wobei Kabel durch eine nicht näher dargestellte, entsprechend abdichtbare Durchtrittsöffnung durch den Deckel insbesondere an dessen Unterseite herausgeführt werden können.

Bei beiden Ausführungsformen gemäß den Fig. 3 und 4 ist im wesentlichen diametral dem Ventilator bzw. Gebläse 2 gegenüberliegend eine Stromversorgung 26 angedeutet, wobei sich für den Fall, daß beispielsweise in dieser Stromversorgung 26 ein weiteres Gebläse bzw. ein weiterer Ventilator integriert ist, welcher dem in Fig. 1b schematisch mit 5 angedeuteten, zusätzlichen Ventilator entspricht, durch diesen zusätzlichen Ventilator über die Durchtrittsschlitze 22 im Bereich der Rückwand ein zusätzlicher Kühlkreislauf entsprechend den in Fig. 1b schematisch angedeuteten Strömungswegen 6 erzielen läßt.

Es läßt sich somit eine vollständige Kühlung insbesondere auch von Eckbereichen im gesamten Innenraum des luftdicht abschließbaren Gehäuses 1 erzielen.

Für eine ordnungsgemäße Rückführung der Kühlluft zu dem Ventilator 2 ist insbesondere aus der Darstellung gemäß Fig. 4 ersichtlich, daß die Bodenplatte 19 im Bereich der Festlegungsposition des Ventilators 2 mit einer entsprechenden Durchbrechung bzw. Öffnung 27 ausgebildet ist, durch welche unmittelbar Luft zu dem Ventilator 2 rückgeführt wird, so daß sich die in den Fig. 1a und 1b schematisch angedeuteten, geschlossenen Strömungswege erzielen lassen.

In den vergrößerten und schematischen Darstellungen gemäß Fig. 5 und 6 der Ausbildung bzw. Anordnung des Ventilators 2 ist ersichtlich, daß das eigentliche Ventilatorgehäuse 28, wobei die Ventilatorflügel nicht dargestellt sind, schräg in einem tunnelartigen Kanal 29 angeordnet bzw. festgelegt ist, wobei der tunnelartige Kanal in der Hauptdurchströmungsrichtung des Ventilators mit einer Vielzahl von Durchbrechungen bzw. Luftdurchtrittsschlitzen 30 ausgebildet ist. Über diese Schlitze 30 wird Kühlluft in den Bereich zur Rückwand des Gehäuses entsprechend den in Fig. 1a und 1b schematisch dargestellten Strömungswegen 4 entsprechend den Pfeilen 31 in Fig. 6 ausgebracht. Darüber hinaus erfolgt durch die schräge Anordnung des Ventilators 28 in dem tunnelförmigen Kanal 29 ein Ausbringen von Luft über eine Ausbringöffnung 32 in einer Seitenwand in Richtung zu den Laufwerken entsprechend dem Pfeil 33 in Fig. 6 zur Ausbildung der in den Fig. 1a und 1b schematisch dargestellten Strömungswege 3. In den Ventilator 2 wird Luft insbesondere durch die entsprechende Durchbrechung der Bodenplatte gemäß dem Pfeil 34 angesaugt, wodurch die Strömungswege 3 und 4 geschlossen werden. Weiters kann gegebenenfalls Frischluft entsprechend dem Pfeil 35, welcher dem Pfeil 7 in Fig. 1 entspricht, zusätzlich über die Außenwand angesaugt werden. Zu diesem Zweck ist in Fig. 4 ersichtlich, daß in der entsprechenden Seitenwand des Außengehäuses im Bereich der Positionierung des Ventilators 2 zusätzliche, insbesondere verschließbare Luftzuführöffnungen bzw. -schlitze 36 vorgesehen sind. Für den Fall, daß diese Luftzufuhrschlitze 36 abgeschlossen sind, erfolgt keine Zufuhr von Frischluft entsprechend dem Pfeil 35, wobei durch ein Anliegen des tunnelförmigen Kanals 29 an der entsprechenden Seitenwand der Kanal 29 somit an dieser Seitenfläche geschlossen ist und das Ansaugen von Luft lediglich über die Bodenplatte entsprechend dem Pfeil 34 erfolgt.

Es ist ersichtlich, daß durch die schräge Anordnung des Ventilators 28 in dem tunnelförmigen Kanal 29, welcher nur entsprechend den auszubildenden, voneinander verschiedenen Strömungswegen sowie in Übereinstimmung mit der Zufuhröffnung in der Bodenplatte mit Durchbrechungen bzw. Lufteintrittsschlitzen ausgebildet ist, ein gezieltes Ausbringen der Kühlluft durch das Gebläse bzw. den Ventilator 2 erfolgt und ein Rückführen der Kühlluft im Sinne eines unmittelbaren Ansaugens der vom Ventilator ausgebrachten Luft ohne die erwünschte Kühlung des Innenraums des Gehäuses nicht möglich ist.

## Patentansprüche

1. Computer, insbesondere Personal Computer für den Industrieeinsatz, wobei in einem Gehäuse (1) wenigstens eine Rechnereinheit, eine Stromversorgungseinheit sowie ein Kühlsystem zur Kühlung der im Gehäuse (1) aufgenommenen Komponenten vorgesehen ist, dadurch gekennzeichnet, daß das Kühlsystem im Inneren des Gehäuses (1) wenigstens zwei voneinander verschiedene, im wesentlichen geschlossene, das Innere des Gehäuses (1) in voneinander verschiedenen Strömungswegen (3, 4, 6) überstreichende Kühlkreisläufe aufbaut.

2. Computer nach Anspruch 1, dadurch gekennzeichnet, daß das Gehäuse (1) mit im wesentlichen luft- und staubdicht abgeschlossenen bzw. abschließbaren Außenwänden (9, 10, 11, 12) ausgebildet ist und im Inneren unmittelbar benachbart zu wenigstens einigen Seitenwänden bzw. dem Boden (10) Zwischenwände (18) mit Durchtrittsöffnungen (22, 23) zur Ausbildung der unterschiedlichen Strömungswege (3, 4, 6) angeordnet sind.

3. Computer nach Anspruch 1 oder 2, dadurch gekennzeichnet, daß eine mit einem Hohlraum versehene Bodenplatte (19) vorgesehen ist, welche in Randbereichen mit Durchbrechungen bzw. Durchtrittsschlitzen (20, 21) ausgebildet ist.

4. Computer nach Anspruch 1, 2 oder 3, dadurch gekennzeichnet, daß ein abnehmbarer Deckel (12) an der Rückseite des Gehäuses vorgesehen ist, welcher einen Freiraum zwischen einer am rückwärtigen Ende des Gehäuses vorgesehenen Zwischenwand (18) und der Innenfläche des Deckels (12) definiert, wobei der Freiraum mit Durchtrittsöffnungen (22, 23) in der Zwischenwand (18) und/oder der Bodenplatte (19) in Verbindung steht.

5. Computer nach einem der Ansprüche 1 bis 4, dadurch gekennzeichnet, daß in einem Eckbereich des Gehäuses ein in einem tunnelartigen Kanal (29) angeordneter Ventilator (28) vorgesehen ist, welcher schräg zur Längsachse des Kanals (29) eingebaut ist, wobei der Kanal (29) in einer Begrenzungswand in der Hauptdurchströmungsrichtung des Ventilators als auch in wenigstens zwei normal dazu stehenden Seitenwänden mit Durchtrittsöffnungen (30, 32) ausgebildet ist.

6. Computer nach Anspruch 5, dadurch gekennzeichnet, daß im Bereich des Ventilators (2) die Bodenplatte (19) mit einer Zufuhröffnung (27) für zu dem Ventilator rückzuführende Luft ausgebildet ist.

7. Computer nach Anspruch 5 oder 6, dadurch gekennzeichnet, daß im Bereich des Ventilators (2) die entsprechende Außenwand (10) des Gehäuses mit insbesondere verschließbaren Luftzufuhröffnungen (36) ausgebildet ist.

8. Computer nach einem der Ansprüche 1 bis 7, dadurch gekennzeichnet, daß Laufwerke (14, 15) mit einer insbesondere staubdicht abschließbaren, verschwenkbaren Abdeckung (16) abdeckbar sind.

9. Computer nach einem der Ansprüche 1 bis 8, dadurch gekennzeichnet, daß an einander im wesentlichen diametral gegenüberliegenden Eckbereichen des Gehäuses (1) zwei Ventilatoren (2, 5) vorgesehen sind, wobei die von den Ventilatoren (2, 5) im Inneren des Gehäuses aufgebauten, im wesentlichen geschlossenen Strömungswege (3, 4, 6) einander kreuzen bzw. schneiden.
